# EUROPÄISCHE PATENTANMELDUNG

(11) **EP 0 557 832 A1**
(43) Veröffentlichungstag der Anmeldung: **01.09.1993**
(21) Anmeldenummer: 93102282.6
(22) Anmeldetag: 13.02.1993
(51) Int. Cl.: B01D 19/00, B01F 9/00, B04B 5/12

(54) **Mehrkammerzentrifuge zum Ent- oder Begasen von Flüssigkeiten**

(30) Priorität: 26.02.1992 DE 4205864
(71) Anmelder: MASCHINENBAU HUBERT HAMACHER, D-52066 Aachen (DE)
(72) Erfinder: Pelzer, Rudolf, W-5120 Herzogenrath (DE)
(74) Vertreter: König, Werner, Dipl.-Ing.

(57) **Zusammenfassung**

Bei einer Mehrkammerzentrifuge zum Ent- oder Begasen von Flüssigkeiten, die einen Boden (7) einen auf Abstand dazu angeordneten Deckel (3), Gasdurchlässe in Boden (7) und Deckel (3), einen im Deckel (3) vorgesehenen Flüssigkeitsanschluß und zwei Sätze von koaxial zueinander angeordneten Zylindern hat, geht der Satz (= Rotor) mit den drehbar angeordneten Zylindern vom Boden (7) aus, während der andere Satz (= Stator) vom Deckel (3) ausgeht und feststeht. Jeweils ein Zylinder des einen Satzes greift in den Zwischenraum zwischen den Zylindern des anderen Satzes ein, wobei die Zylinder an den Boden (7) bzw. Deckel (3) unter Freilassung einer radialen Durchtrittsöffnung heranreichen. Zumindest ein Teil der Zylinder des drehbar gelagerten Satzes kann zumindest teilweise aus einem Gewebemterial gebildet sein, das siebartig ausgebildet sein kann. Auf den feststehenden Zylindern (4) können Schwingungserreger (19) und/oder Heizungsvorrichtungen (13 angeordnet sein.

## Beschreibung

Die Erfindung betrifft eine Mehrkammerzentrifuge zum Ent- oder Begasen von Flüssigkeiten bestehend aus einem Boden und einem auf Abstand dazu angeordenten Deckel, jeweils mit Gasdurchlässen, einem im Deckel vorgesehenen Flüssigkeitsanschluß und zwei Sätzen von koaxial zueinander zugeordneten Zylindern, wobei ein Satz (= Rotor) drehbar gelagert, mit einem Drehantrieb gekoppelt und am Boden festgelegt ist, während der andere Satz vom Deckel ausgeht und jeweils ein Zylinder des einen Satzes in den Zwischenraum zwischen den Zylindern des anderen Satzes eingreift und an den Boden bzw. Deckel unter Freilassung einer radialen Durchtrittsöffnung heranreicht.

In der Verfahrens- und Prozeßtechnik stellt sich häufig die Aufgabe, eine Flüssigkeit zu entgasen, also gelöste oder ungelöste = blasenförmige Gase zu entfernen oder aber eine Flüssigkeit definiert zu begasen. Bei beiden Aufgabenstellungen ist die Flüssigkeit möglichst fein zu verteilen, d.h. ihr ist eine möglichst große freie Oberfläche zu geben. Beim Entgasen ist dabei die feinverteilte Flüssigkeit dem Vakuum oder einem diesem mehr oder weniger stark angenäherten Zustand, beim Begasen einer bestimmten Gasatmosphäre auszusetzen. Aus dieser Gasatmosphäre diffundieren dann Gasmoleküle des Beladungsgases in die Flüssigkeit.

Sowohl beim Entgasen als auch beim Begasen ist die Intensität des Stoffaustausches zum einen von der Größe der freien Oberfläche der Flüssigkeit und zum anderen von der Expositionsdauer der fein verteilten Flüssigkeit im jeweiligen Stoffaustauschzustand abhängig.

Es ist bereits eine Mehrkammerzentrifuge bekannt (DE 37 00 581 C2), die einen Rotor aufweist, der aus einer Vielzahl koaxial angeordneter, im Durchmesser abgestuft abweichender, glattwandiger und jeweils in einer Dreheinheit fest verbundener Blechzylinder besteht. Die eine Hälfte dieser Blechzylinder ist fest mit dem Deckel, die andere fest mit dem Boden des Rotors verbunden. Beide Zylindersätze greifen kammartig in der Weise ineinander, daß jeweils die freien Enden des oberen bzw. der unteren Zylinder einen gewissen axialen Abstand zum Boden bzw. zum Deckel des Rotors haben.

In den Rotor wird zentral die zu ent- oder begasende Flüssigkeit eingespeist. Sie überfließt beginnend mit dem am weitesten innenliegenden Zylinder die inneren Oberflächen der Zylinder von unten nach oben, dann von oben nach unten, anschließend wieder von unten nach oben usw.. Dabei bilden sich auf diesen Oberflächen der Zylinder in axialer Richtung schnellfließende Dünnschichten aus, deren Stärken in Abhängigkeit von Rotordrehzahl, Zylinderdurchmesser und Durchsatzmenge stufenweise von innen nach außen abnehmen. An den übergängen von einem zum nächstfolgenden Zylinder wird jeweils die Flüssigkeitschicht zerrissen, d.h. die Flüssigkeit fliegt in feinen Tröpfchen bis zum Aufprall auf die nächste Zylinderoberfläche frei durch den Reaktionsraum. Vom äußersten Zylinder schließlich fliegen die Tröpfchen auf die Oberfläche einer feststehenden Gehäusewand, sammeln sich dann zu einer dünnen Schicht und fließen auf einer Spiralbahn mit abnehmender Strömungsgeschwindigkeit nach unten in einen Sumpf der Zentrifuge ab.

Es ist ferner eine Vorrichtung zum Entgasen viskoser Flüssigkeiten bekannt (DE 27 44 261 A1), die eine Anzahl von kegelstumpfförmigen Blechmänteln aufweist, wobei die einen Blechmäntel fest mit dem Deckel und die anderen fest mit dem Boden des Roters verbunden sind. Auch hier greifen beide Sätze von Blechmänteln in der Weise ineinander, daß jeweils die freien Enden der oberen bzw. der unteren Blechmäntel einen axialen Abstand zum Boden bzw. zum Deckel des Rotors haben. Durch die kegelstumpfförmige Ausbildung der Blechmäntel sollen die Flüssigkeitsteilchen auf ihrem Weg über die Blechmäntel beschleunigt werden.

Eine weitere Vorrichtung zum Entgasen viskoser Flüssigkeiten (DT 25 52 231 A1) sieht ebenfalls kammartig ineinandergreifende Zylinder vor, die zu einem Rotor zusammengefaßt sind. Diese Vorrichtung zeichnet sich insbesondere durch einen innerhalb des innersten Zylinders angeordneten Verteilerteller aus, auf den die zu entgasende Flüssigkeit aufgegeben wird.

Bei den bekannten Zentrifugen erfährt die Flüssigkeit bei jedem Übergang von einem zum nächsten Zylinder bzw. kegelstumpfförmigen Blechmantel eine Beschleunigung der Umfangsgeschwindigkeit, die auch zu einer Erhöhung der axialen Strömungsgeschwindigkeit der Flüssigkeit auf der jeweiligen Oberfläche führt. Diese Erhöhung der Strömungsgeschwindigkeit hat eine Reduzierung der Expositionsdauer der Flüssigkeit im Reaktionsraum zur Folge.

Die Aufgabe der vorliegenden Erfindung besteht nun darin, eine Zentrifuge der eingangs erwähnten Art derart weiterzubilden, daß die Expositionsdauer der feinverteilten Flüssigkeit im Stoffaustauschzustand bei vereinfachtem konstruktivem Aufbau erhöht wird.

Diese Aufgabe wird bei einer Mehrkammerzentrifuge der eingangs erwähnten Art erfindungsgemäß dadurch gelöst, daß der vom Deckel ausgehende Satz von Zylindern feststehend angeordnet ist.

Beim Übergang der Flüssigkeit von einem rotierenden auf den nächstfolgenden feststehenden Zylinder wird sich auf diesem eine spiralförmig-axial fließende Dünnschicht ausbilden, deren Strömungsgeschwindigkeit durch die Wandreibung gebremst wird. Die Folge ist eine Erhöhung der Verweilzeit der Flüssigkeitschicht auf diesem Zylinder und damit insgesamt eine deutliche Zunahme der Expositionsdauer der Flüssigkeitsdünnschichten im Reaktionsraum.

Je nach Aufgabenstellung, insbesondere Entgasung oder Begasung, werden die radialen Abstände zwischen rotierenden und feststehenden Zylindern gewählt. Diese radialen Abstände können z.B. von innen nach außen stufenweise zu- oder abnehmen. Dahinter steht die physikalische Zielsetzung, mit größeren radialen Zylinderabständen eine höhere Aufprallenergie und damit eine bessere Entgasung der abgeschleuderten Flüssigkeitströpfchen zu erreichen, dagegen mit kleineren radialen Zylinderabständen einen größeren Anteil an rotatorischer Bewegungsenergie zu erhalten. Die rotierenden Zylinder haben jedenfalls primär die Funktion die Flüssigkeit wieder rotatorisch zu beschleunigen.

Die erfindungsgemäße Mehrkammerzentrifuge kann ferner so ausgebildet sein, daß mindestens ein Teil der Zylinder mindestens des vom Boden ausgehenden Satzes von Zylindern zumindest teilsweise aus einem Gewebematerial besteht. Die so ausgebildeten Gewebezylinder sind flexibel und im ruhenden Zustand unrund, zentrieren sich jedoch bei Rotation absolut kreisrund. Vorzugsweise besteht das Gewebematerial aus Metallfäden.

Gemäß einem weiteren Vorschlag der Erfindung ist vorgesehen, daß das Gewebematerial siebartig ausgebildet ist. Man kann dabei die Maschenweite für eine bestimmte Flüssigkeit beispielsweise so wählen, daß die über die rotierenden Gewebezylinder strömende Dünnschicht in Strömungsrichtung dadurch stetig abnimmt, daß ein Teil der Flüssigkeit also durch die Maschen hindurchtritt, in Tröpfchen zerrissen wird und mit hoher Energie auf den nächstfolgenden feststehenden Zylinder aufschlägt. Dies führt zu einer erheblichen Steigerung der freien Oberfläche der im Reaktionsraum exponierten Flüssigkeit und damit zu einer Verbesserung des Entgasungseffekts.

Die erfindungsgemäße Mehrkammerzentrifuge kann auch so ausgebildet sein, daß das Gewebematerial flüssigkeits- und gasundurchlässig ist. Dabei werden die Oberflächenrauhigkeit gesteigert, die Bewegung der Dünnschicht gebremst und damit die Expositionsdauer erhöht.

Die erfindungsgemäße Mehrkammerzentrifuge kann ferner so ausgebildet sein, daß zumindest an einigen Zylindern Schwingungserreger angreifen. Die Schwingungserreger, bei denen es sich um Ultraschallerreger handeln kann, sitzen dabei auf der Außenfläche der Zylinder und regen diese zu entsprechenden Schwingungen an und fördern damit zusätzlich die Entgasung der darüber fließenden Flüssigkeit.

Die erfindungsgemäße Mehrkammerzentrifuge kann ferner so ausgebildet, daß zumindest einige der Zylinder mit einer elektrischen Widerstandsheizung versehen sind. Auf diese Weise kann der Stoffaustauschvorgang über eine gezielte Erwärmung der Flüssigkeit genau gesteuert werden. Die für die Beheizung erforderliche Energieeinleitung in die feststehenden Zylinder ist konstruktiv einfach.

Schließlich kann die erfindungsgemäße Mehrkammerzentrifuge so ausgebildet sein, daß zumindest einige der Zylinder des feststehenden Satzes dampfbeheizt sind.

Zur definierten Begasung der Flüssigkeit kann das Beladungsgas von unten nach oben in einer Mischung aus KreuzGegen-Gleichstrom durch den Rotor geführt und oben am Deckel abgesaugt werden. Dieser Strömungsweg wird durch Öffnungen im Boden und im Deckel des Rotorgehäuses, wie in DE 37 00 581 C2 beschrieben, ermöglicht.

Im folgenden Teil der Beschreibung werden einige Ausführungsformen der erfindungsgemäßen Mehrkammerzentrifuge anhand von Zeichnungen beschrieben. Es zeigt:
- Abb. 1: einen Axialschnitt durch eine erste Ausführungsform der erfindungsgemäßen Mehrkammerzentrifuge,
- Abb. 2: einen axialen Teilschnitt, bei der die feststehenden Zylinder durch Widerstandsheizung (linker Teil der Abbildung) oder durch Dampf (rechter Teil der Abbildung) beheizt sind, und
- Abb. 3: eine der Abbildung 2 ähnliche Ansicht, wobei die feststehenden Zylinder außenseitig mit Schwingungserregern versehen (linker Teil der Abbildung) oder als radial durchlässiges Gewebe (rechter Teil der Abbildung) ausgebildet sind.

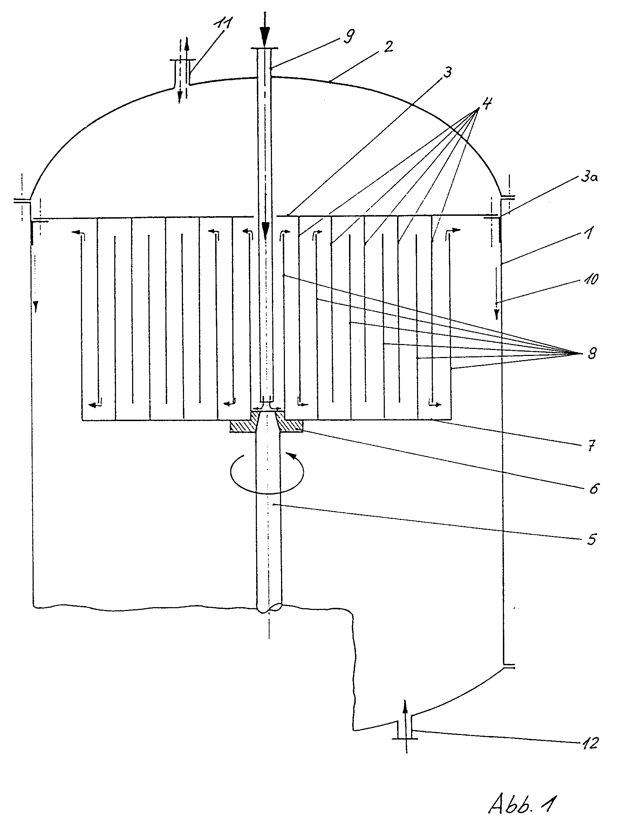

Die Ausführungsform der erfindungsgemäßen Mehrkammerzentrifuge gemäß Abb. 1 zeigt ein Gehäuse 1, das mittels einer Haube 2 abgeschlossen ist. Innerhalb des Gehäuses ist nahe seinem oberen Rand auf Stützwinkeln 3a ein Deckel 3 festgelegt, mit dem jeweils der obere Rand eines Satzes von konzentrisch angeordneten feststehenden Zylindern 4 verbunden ist.

In das Gehäuse 1 ragt eine Antriebswelle 5 hinein, die an ihrem oberen Ende ein Nabenteil 6 trägt. Auf dem Nabenteil 6 wiederum stützt sich ein Boden 7 ab, an dem jeweils der untere Rand eines Satzes von sechs Zylindern 8 festgelegt ist. Die Zylinder 8 greifen kammartig zwischen die feststehenden Zylinder 4 und sind konzentrisch zu diesen angeordnet.

Durch die Haube 2 und den Deckel 3 hindurch ist ein Zuführrohr 9 geführt, welches dicht über dem Nabenteil 6 endet. Durch dieses Zuführrohr 9 wird die zu ent- oder begasende Flüssigkeit in Pfeilrichtung eingeführt. Die Flüssigkeit verläßt das Zuführrohr 9 an seinem untersten Ende, tritt dort radial nach außen aus und gelangt schließlich an die Innenfläche des Zylinders 8 mit dem kleinsten Durchmesser. Da nun aber alle Zylinder 8 über die Antriebswelle 5, das Nabenteil 6 und den Boden 7 in Drehung versetzt werden, wirkt eine Zentrifugalkraft auf die auf die Innenfläche des Zylinders auftreffende Flüssigkeit, verteilt sie über die Höhe des Zylinders 8 und gibt ihr eine entsprechende Umfangsgeschwindigkeit. Es bildet sich zunächst am innersten Zylinder 8 eine Dünnschicht, die an seinem oberen Ende abreißt und auf den radial außen folgenden feststehenden Zylinder 4 übergeht. Die rotatorische Bewegung der so übergegangenen Flüssigkeit wird nun über die anschließende Bewegungsbahn auf dem feststehenden Zylinder gebremst. Es bildet sich auf dem feststehenden Zylinder eine Dünnschicht, die wegen der reduzierten rotatorischen Geschwindigkeit mit verlängerter Expositionszeit diesen feststehenden Zylinder 4 an seinem unteren Rand verläßt und auf den nach radial außen folgenden nächsten rotierenden Zylinder 8 übergeht. Die Flüssigkeit wird auf diese Weise durch alle so gebildeten Kammern der Zentrifuge hindurchgeführt und verläßt schließlich die Innenfläche des am weitesten außen liegenden Zylinders 8, um von dort aus an die Innennwand des Gehäuses 1 überzugehen, wo die Flüssigkeit entsprechend dem Pfeil 10 nach unten abfließt.

Das beim Entgasen freiwerdende Gas kann durch einen Stutzen 11 abgezogen werden. Im Falle des Begasens der zugeführten Flüssigkeit kann das Beladungsgas durch Stutzen 11 und/oder 12 zugeführt werden.

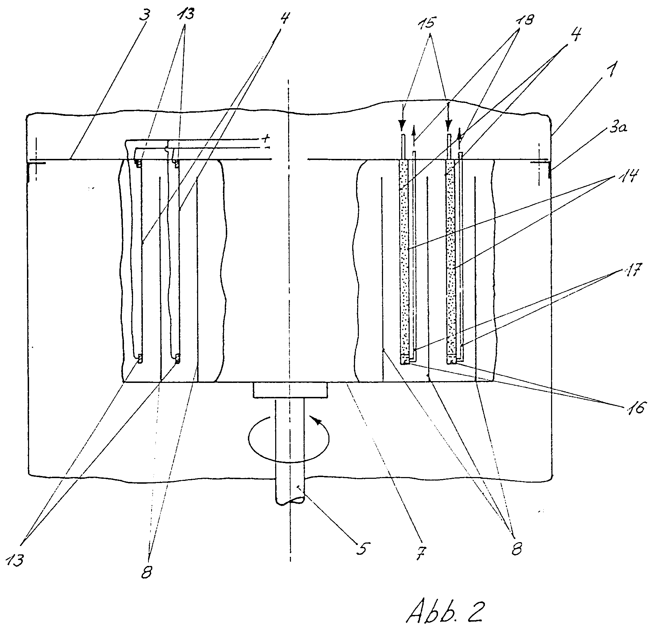

Abb. 2 zeigt links eine elektrische Widerstandsbeheizung der feststehenden Zylinder 4. Dabei sind im oberen und unteren Randbereich der feststehenden Zylinder 4 Anschlußklemmen 13 vorgesehen. Die elektrischen Zuleitungen sind durch den Deckel 3 hindurchgeführt. Da der Deckel 3 und die damit verbundenen Zylinder 4 feststehen, ist der Stromanschluß in einfacher Weise möglich.

Die am Boden 7 festgelegten rotierenden Zylinder 8 sind wie anhand von Abb. 1 beschrieben ausgebildet.

In Abb. 2 ist rechts die Beheizung von feststehenden Zylindern mittels Dampf beschrieben. Dabei sind die feststehenden Zylinder 4 als Doppelmantel 14 ausgebildet. Von oben her wird in Richtung der Pfeile 15 Dampf zugeführt, der im hohlzylindrischen Heizraum kondensiert. Das Kondensat 16 wird durch Leitungen 17 in Richtung der Pfeile 18 abgesaugt. Auch hier sind die Zylinder 8, die mit der Antriebswelle 5 gekoppelt sind, gegenüber der Ausführung gemäß Abb. 1 nicht verändert.

Aufgrund der feststehenden Anordnung der Zylinder 12 ist die Zuführung von Dampf und die Abführung von Kondensat mit einfachen konstruktiven Mitteln zu bewirken.

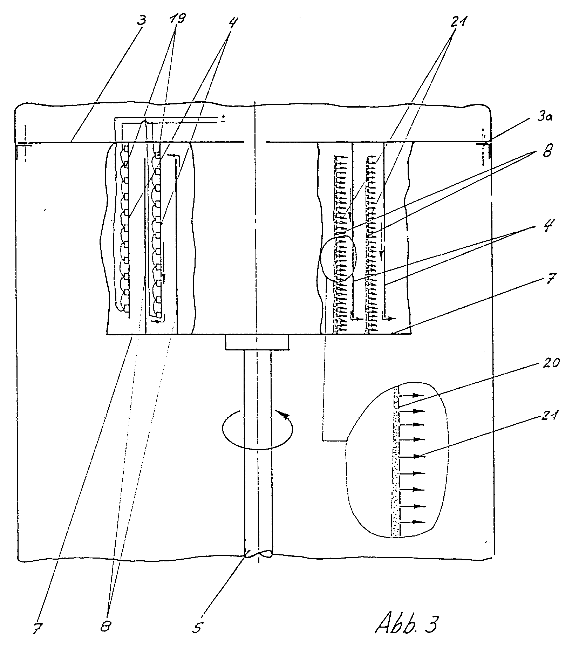

Nach der Darstellung im linken Teil der Abb. 3 sind auf den Außenflächen der feststehenden Zylinder 4 Schwingungserreger 19 angeordnet und an eine Stromquelle angeschlossen. Diese Schwingungserreger 19 können die gesamte Außenfläche eines feststehenden Zylinders 4 äquidistant abdecken. Es ist aber auch möglich, die Schwingungserreger 19 in axial- oder spiralförmig verlaufenden Reihen anzuordnen, die von der innenseitig am gleichen Zylinder rotierend geführten Dünnschicht überstrichen werden.

Abb. 3 zeigt in ihrer rechten Hälfte mit dem Boden 7 verbundene und mit diesem rotierende Zylinder 8, die aus einem siebartigen Gewebematerial 20 aus Metallfäden gebildet sind. Dadurch ergibt sich, daß ein Teil Flüssigkeit auf ihrem Weg über die Innenfläche eines solchen Zylinders 8 in Tröpfchenform das Gewebematerial durchdringt und auf den nächstfolgenden feststehenden Zylinder 4 aufschlägt. Die Flüssigkeitströpfchen verlassen dann einen solchen Zylinder in Richtung der Pfeile 21, wie insbesondere die in Abb. 3 unten rechts dargestellte Detailansicht zeigt.

Die Dicke der Dünnschicht nimmt demnach am Zylinder 17 nach oben hin ab. Die Maschenweite des Gewebematerials 20 des Zylinders 8 kann entsprechend den jeweiligen Gegebenheiten gewählt werden.

Es ist auch möglich, das Gewebematerial flüssigkeits- und gasundurchlässig auszuführen und es lediglich zur Erhöhung der Oberflächenrauhigkeit und damit zur Reduzierung der Strömungsgeschwindigkeit und folglich zur Erhöhung der Expositionszeit zu verwenden.

Die anhand der Abb. 2 und 3 beschriebenen Ausführungen betreffend die Beheizung und Schwingungserregung der feststehenden Zylinder sowie die Ausbildung der rotierenden Zylinder 8 aus Gewebematerial 20 sind miteinander in Anpassung an den jeweiligen konkreten Bedarfsfall kombinierbar. Dabei kann es sinnvoll sein, nur einige der feststehend oder der rotierenden Zylinder entsprechend auszustatten.

## Patentansprüche

1. Mehrkammerzentrifuge zum Ent- oder Begasen von Flüssigkeiten bestehend aus einem Boden und einem auf Abstand dazu angeordenten Deckel, jeweils mit Gasdurchlässen, einem im Deckel vorgesehenen Flüssigkeitsanschluß und zwei Sätzen von koaxial zueinander zugeordneten Zylindern, wobei ein Satz (= Rotor) drehbar gelagert, mit einem Drehantrieb gekoppelt und am Boden festgelegt ist, während der andere Satz vom Deckel ausgeht und jeweils ein Zylinder des einen Satzes in den Zwischenraum zwischen den Zylindern des anderen Satzes eingreift und an den Boden bzw. Deckel unter Freilassung einer radialen Durchtrittsöffnung heranreicht, **dadurch gekennzeichnet**, daß der vom Deckel (3) ausgehende Satz (= Stator) von Zylindern (4) feststehend angeordnet ist.

2. Mehrkammerzentrifuge nach Anspruch 1, dadurch gekennzeichnet, daß mindestens ein Teil der Zylinder (8;4) mindestens des vom Boden (7) ausgehenden Satzes von Zylindern (8) zumindest teilsweise aus einem Gewebematerial (20) besteht.

3. Mehrkammerzentrifuge nach Anspruch 1 oder 2 dadurch gekennzeichnet, daß das Gewebematerial (20) aus Metallfäden besteht.

4. Mehrkammerzentrifuge nach einem der vorhergehenden Ansprüche, dadurch gekennzeichnet, daß das Gewebematerial (20) siebartig ausgebildet ist.

5. Mehrkammerzentrifuge nach einem der Ansprüche 1 bis 3, dadurch gekennzeichnet, daß das Gewebematerial (20) flüssigkeits- und gasundurchlässig ist.

6. Mehrkammerzentrifuge nach einem der vorhergehenden Ansprüche, dadurch gekennzeichnet, daß zumindest an einigen Zylindern (4) Schwingungserreger (19) angreifen.

7. Mehrkammerzentrifuge nach Anspruch 6, dadurch gekennzeichnet, daß die Schwingungserreger (19) als Ultraschallerreger ausgebildet sind.

8. Mehrkammerzentrifuge nach einem der vorhergehenden Ansprüche, dadurch gekennzeichnet, daß zumindest einige der Zylinder (4) mit einer elektrischen Widerstandsheizung (13) versehen sind.

9. Mehrkammerzentrifuge nach einem der vorhergehenden Ansprüche, dadurch gekennzeichnet, daß zumindest einige der Zylinder (4) dampfbeheizt sind.
